# EUROPÄISCHE PATENTANMELDUNG

(11) **EP 1 408 719 A2**
(43) Veröffentlichungstag der Anmeldung: **14.04.2004**
(21) Anmeldenummer: 03008325.7
(22) Anmeldetag: 10.04.2003
(51) Int. Cl.: H05B 3/44

(54) **Vorrichtung zur Beheizung von zylindrischen Teilen**

(30) Priorität: 11.10.2002 DE 10247509
(71) Anmelder: Hotset Heizpatronen u. Zubehör GmbH, 58511 Lüdenscheid (DE)
(72) Erfinder: Sadowski, Andre, 58762 Altena (DE)
(74) Vertreter: Köchling, Conrad-Joachim, Dipl.-Ing.

(57) **Zusammenfassung**

Um eine Vorrichtung zur Beheizung von zylindrischen Teilen, bestehend aus einer wendelartig geformten elektrischen Heizpatrone, die auf das zu beheizende Teil aufschiebbar ist, sowie einer Spannvorrichtung mittels derer die Heizpatrone gegen das zu beheizende Teil angedrückt ist, zu schaffen, die unter Einsatz von möglichst wenig Teilen ein Spannen ohne zusätzliches Werkzeug ermöglicht, wird vorgeschlagen, dass die Spannvorrichtung aus einem ersten zylindrischen Mantelteil (2) besteht, in welchem die wendelartig geformte Heizpatrone (1) innenliegend und koaxial dazu ausgerichtet angeordnet ist, sowie einem zweiten zylindrischen Mantelteil (3), welches auf das erste Mantelteil (2) axial aufschiebbar ist, wobei das erste Mantelteil (2) mittels des aufgeschobenen zweiten Mantelteils (3) radial mindestens in Teilbereichen zusammengedrückt ist und die Heizpatrone (1) fest gegen das zu beheizende Teil angedrückt ist.

## Beschreibung

Die Erfindung betrifft eine Vorrichtung zur Beheizung von zylindrischen Teilen, insbesondere Düsen von Spritzgießeinrichtungen, bestehend aus einer wendelartig geformten elektrischen Heizpatrone, die auf das zu beheizende Teil aufschiebbar ist, sowie einer Spannvorrichtung, mittels derer die Heizpatrone gegen das zu beheizende Teil angedrückt ist.

Es ist zur Beheizung von zylindrischen Teilen der oben genannten Art üblich, wendelartig geformte elektrische Heizpatronen als Heizelemente einzusetzen. Solche Heizpatronen bestehen aus einem zu einer Wendelform formbaren Mantel mit innen liegender hochwärmeleitfähiger elektrischer Isolierung und innen liegenden Heizleitern.

Um zu erreichen, dass eine solche wendelartig geformte Heizpatrone fest an das zu beheizende zylindrische Teil angelegt werden kann, sind Spannvorrichtungen im Stand der Technik bekannt.

Beispielsweise ist ein solches Element bekannt, welches aus einer Metallmanschette mit Spannbacken, Spannkeilen und einer Stellschraube für die Spannkeile besteht. Die Spannwirkung erfolgt einseitig axial über Spannbacken und Spannkeile. Hierbei wird eine feste Anspannung des Heizelementes an das zu beheizende Teil nur im Bereich der Anordnung der Spannbacken und Spannkeile erreicht. Zudem ist die Handhabung aufwändig, und es ist ein Platzbedarf für die Anordnung der entsprechenden Schraube, Spannbacken und Spannkeile erforderlich.

Es sind auch Spannbänder mit tangentialer Verschraubung bekannt. Hierbei erfolgt die Spannwirkung tangential umlaufend, wobei in Abhängigkeit von der Länge des zu beheizenden Elementes mehrere entsprechende Spannverschraubungen erforderlich sind. Auch hierbei ist die Montage und Demontage aufwändig, wobei zudem ein relativ großer Einbauraum erforderlich ist.

Es ist auch bekannt, Reflektionsrohre einzusetzen, die über das gewendelte Heizelement in Form eines Metallrohres geschoben werden. Das Metallrohr wird mit dem Heizelement im Bereich von Boden und Kopf verlötet. Ein zusätzliches Spannen ist hierbei nicht möglich.

Ausgehend von dem eingangs bezeichneten Stand der Technik liegt der Erfindung die Aufgabe zugrunde, eine gattungsgemäße Vorrichtung zu schaffen, die unter Einsatz von möglichst wenig Teilen ein Spannen ohne zusätzliches Werkzeug ermöglicht.

Zur Lösung dieser Aufgabe wird vorgeschlagen, dass die Spannvorrichtung aus einem ersten zylindrischen Mantelteil besteht, in welchem die wendelartig geformte Heizpatrone innen liegend und koaxial dazu ausgerichtet angeordnet ist, sowie einem zweiten zylindrischen Mantelteil, welches auf das erste Mantelteil axial aufschiebbar ist, wobei das erste Mantelteil mittels des aufgeschobenen zweiten Mantelteils radial mindestens in Teilbereichen zusammengedrückt ist und die Heizpatrone fest gegen das zu beheizende Teil angedrückt ist.

Gemäß dieser Ausbildung besteht die Spannvorrichtung aus zwei ineinander geschobenen rohrförmigen Mantelteilen, deren innen liegendes die wendelartig geformte Heizpatrone unmittelbar umgibt. Durch die Verschiebebewegung des äußeren zweiten Mantelteiles relativ zu dem innen liegenden ersten Mantelteil wird durch geeignete Mittel erreicht, dass das innen liegende Mantelteil zunehmend zusammengedrückt wird und somit die Heizpatrone fest gegen das zu beheizende Teil angedrückt wird. Die Vorrichtung besteht somit nur aus zwei Teilen, die lediglich ineinander geschoben werden müssen, die also einfach und ohne Werkzeug montiert werden können.

Bevorzugt ist dazu vorgesehen, dass das erste Mantelteil Schlitze aufweist, die das radiale Zusammendrücken ermöglichen.

Vorzugsweise ist vorgesehen, dass das erste Mantelteil Längsschlitze aufweist, die an einem Ende offen an dem Ende des Mantelteils ausmünden.

Zudem ist bevorzugt, dass das erste Mantelteil mehrere gleichmäßig auf dem Umfang verteilte Längsschlitze aufweist.

Um die Durchmesserverjüngung des ersten Mantelteiles beim Aufschieben des zweiten Mantelteiles zu realisieren, ist vorgesehen, dass das erste Mantelteil an seinem einen Ende konisch verdickt ist.

Beim Aufschieben des zweiten Mantelteiles auf das erste Mantelteil läuft gegen Ende der Verschiebebewegung das in Schieberichtung vorn liegende Ende des zweiten Mantelteiles auf die konische Verdickung auf, was dazu führt, dass das erste Mantelteil zusammengedrückt und also im Durchmesser reduziert wird, so dass eine eindeutige Klemmung und ein Anpressen des innenliegenden Heizelementes an das zu beheizende Teil erreicht wird.

Dabei ist bevorzugt vorgesehen, dass die konische Verdickung über eine Länge von ca. 10 mm verläuft.

Des Weiteren ist bevorzugt vorgesehen, dass das zweite Mantelteil an einem Ende innen liegend eine konische Verjüngung aufweist.

Hierdurch wird erreicht, dass beim Aufschieben des zweiten Mantelteils auf das erste Mantelteil die in Schieberichtung hinten liegende konische Verjüngung des zweiten Mantelteiles auf das Ende des ersten Mantelteiles aufläuft, so dass dieses in diesem Bereich zusammengedrückt und im Durchmesser verjüngt wird, so dass auch hier eine Pressung des innen liegenden elektrischen Heizelementes an das zu beheizende Teil erfolgt. Bei der Anordnung beider konischen Elemente werden zwei feste Einspannungen an den beiden Enden der Mantelteile erreicht, was zu einer hohen Lagesicherheit und einer guten Wärmeabgabe durch gleichmäßige Anlage des Heizelementes an das zu beheizende Teil führt. Auch wird eine hohe Lagesicherheit, insbesondere eine hohe Verschiebefestigkeit durch die beiden umlaufenden Spannzonen erreicht.

Auch hierbei ist bevorzugt vorgesehen, dass die konische Verjüngung über eine Länge von ca. 10 mm verläuft.

Die erfindungsgemäße Vorrichtung ist auch leicht zu demontieren, weil durch die erfindungsgemäße Konstruktion ein Anbacken der Teile an der zu beheizenden Düse oder dergleichen nicht erfolgt, so dass durch Schlageinwirkung auf die Stirnseite der Mantelteile eine Lösebewegung eingeleitet werden kann.

Um auch sicherzustellen, dass die innerhalb der Mantelteile wendelartig angeordnete Heizpatrone sich nicht aus den Enden der Mantelteile herausbewegen kann, ist vorgesehen, dass das erste Mantelteil am einen Ende einen nach radial innen vorragenden Kragen aufweist, bzw. dass das zweite Mantelteil am einen Ende einen nach radial innen vorragenden Kragen aufweist.

Insbesondere hinsichtlich des ersten Mantelteiles ist der Kragen derart bemessen, dass beim Spannen des Mantelteiles um den zu beheizenden Gegenstand kein Kontakt zwischen dem vorragenden Kragen und dem zu beheizenden Teil auftritt, sondern noch ein Bewegungsspiel vorhanden ist.

Um eine Fixierung des ersten Mantelteiles relativ zum zweiten Mantelteil zu realisieren, wobei zudem eine Verdrehsicherung erreicht wird, ist vorgesehen, dass das erste Mantelteil eine federnde, nach radial außen vorragende Lasche aufweist, das zweite Mantelteil einen Ausschnitt aufweist, in den die Lasche in der Spannlage der beiden Mantelteile eingreift und eine Verdrehsicherung bildet, wobei der Ausschnitt in axialer Richtung größer ist als die Erstreckung der Lasche in dieser Richtung.

Vorzugsweise ist die Lasche in axialer Richtung beweglich am ersten Mantelteil angeformt, wobei die Lasche mit ihrem der konischen Verdickung des ersten Mantelteils zugewandten Ende am Mantelteil angeformt ist und mit dem der Verdickung abgewandten Ende nach radial außen federt, so dass die Lasche bei der Demontage, also beim Abziehen des zweiten Mantelteils von dem ersten Mantelteil kein Hindernis darstellt.

Die Verdrehsicherung ist deswegen erwünscht, weil damit sichergestellt ist, dass die Austrittsstelle der elektrischen Heizpatrone radial aus den Mantelteilen definiert bleiben soll, sich die Mantelteile also diesbezüglich nicht verdrehen können sollen.

Um hier auch einen Freiraum für das Abführen des Anschlussendes der Heizpatrone zu schaffen, ist vorgesehen, dass das erste und das zweite Mantelteil mit jeweils einem Ausschnitt versehen sind, die sich in Spannlage mindestens teilweise überdecken und einen radialen Durchlass für das Anschlussende der Heizpatrone bilden.

Des Weiteren ist bevorzugt vorgesehen, dass die Mantelteile aus Metall bestehen.

Durch die erfindungsgemäße Ausbildung werden wesentliche Vorteile erreicht. Die Spannvorrichtung besteht nur aus wenigen, nämlich nur aus zwei Einzelteilen. Es ist ein Spannen und Demontieren ohne zusätzliches Werkzeug möglich.

Es sind Überbrückungen von größeren Toleranzen des zu beheizenden Teiles möglich. Es erfolgt kein Festbacken auf dem zu beheizenden Teil. Das entsprechende Heizelement wird in zwei Zonen, vorzugsweise kopf- und bodenseitig gespannt. Es wird eine hohe Verschiebesicherheit durch zwei umlaufende Spannzonen erreicht. Es wird eine vorzügliche Wärmeabgabe durch die gleichmäßige Anlage des Heizelementes an das zu beheizende Teil erreicht.

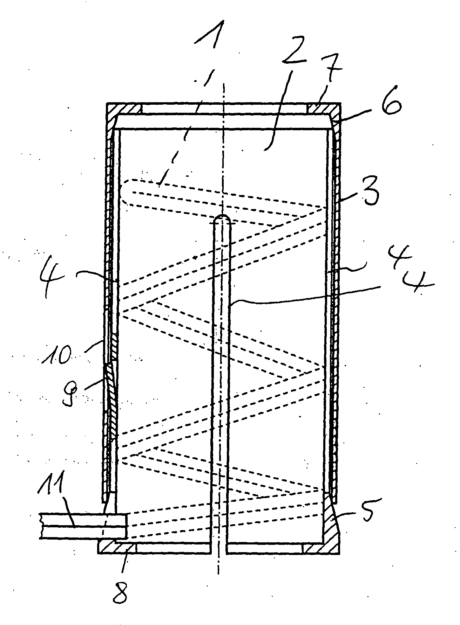

Ein Ausführungsbeispiel der Erfindung ist in der Zeichnung dargestellt und im Folgenden näher beschrieben.

Es zeigt:
Die einzige Zeichnungsfigur eine erfindungsgemäße Vorrichtung in Seitenansicht, teilweise geschnitten.

In der Zeichnung ist eine Vorrichtung zur Beheizung von zylindrischen Teilen, beispielsweise Düsen von Spritzgießeinrichtungen, gezeigt. Sie besteht aus einer wendelartig geformten elektrischen Heizpatrone 1, die auf das zu beheizende Teil (in der Zeichnung nicht dargestellt) axial aufschiebbar ist. Ferner besteht die Vorrichtung aus einer Spannvorrichtung, mittels derer die Heizpatrone 1 gegen das zu beheizende Teil angedrückt werden kann.

Erfindungsgemäß besteht die Spannvorrichtung aus einem ersten zylindrischen Mantelteil 2, in welchem die wendelartig geformte Heizpatrone 1 innen liegend und koaxial dazu ausgerichtet angeordnet ist. Des Weiteren besteht die Vorrichtung aus einem zweiten zylindrischen Mantelteil 3, welches auf das erste Mantelteil 2 in axialer Richtung aufschiebbar ist, wobei das erste Mantelteil 2 durch das aufgeschobene zweite Mantelteil 3 radial mindestens in Teilbereichen zusammengedrückt wird, und die Heizpatrone 1 fest gegen das zu beheizende Teil angedrückt wird.

Um diese Zusammendrückbewegung zu erleichtern, ist das erste Mantelteil 2 mit Schlitzen 4 versehen, die axial verlaufen und am unteren oder oberen Ende des Mantelteiles 2 offen ausmünden, wobei die Schlitze 4 gleichmäßig auf den Umfang verteilt sind, im Ausführungsbeispiel um 90° jeweils versetzt. Um die Zusammendrückbewegung einzuleiten weist das erste Mantelteil 2 an seinem in der Zeichnung unteren Ende eine konische Verdickung 5 auf, die vorzugsweise über eine Länge von etwa 10 mm verläuft. Diese Länge ist abhängig von dem Winkel des Konus der konischen Verdickung 5.

Das zweite Mantelteil 3 weist an seinem in der Zeichnung oberen Ende eine konische Verjüngung 6 auf, die ebenfalls über eine Länge von ca. 10 mm in Achsrichtung gesehen verläuft. Durch diese beiden konischen Elemente wird sichergestellt, dass beim Zusammenschieben des ersten und zweiten Mantelteiles in eine Position, wie sie beispielsweise in der Zeichnung dargestellt ist, das erste Mantelteil 2 an beiden Enden nach radial innen zusammengedrückt wird und somit die Heizpatrone 1 gegen das zu beheizende Teil fest angepresst wird.

Um zu vermeiden, dass insbesondere vor der Endmontage der Teile die Heizpatrone 1 axial aus den schon lose zusammengefügten Mantelteilen 2,3 herausrutscht, ist am zweiten Mantelteil 3 in der zeichnerischen Darstellung oben ein radial nach innen vorragender Kragen 7 und am ersten Mantelteil 2 am unteren Ende ebenfalls ein nach radial innen vorragender Kragen 8 als Lagesicherung für die Heizpatrone 1 vorgesehen.

Zusätzlich weist das erste Mantelteil 2 eine federnde, nach radial außen vorragende Lasche 9 auf, während das zweite Mantelteil 3 einen relativ großen Ausschnitt 10 aufweist, in den die Lasche mindestens in der Spannlage der beiden Mantelteile eingreift, wie in der Zeichnung dargestellt ist. Es ist damit eine Verdrehsicherung der Teile zueinander gebildet. Der Ausschnitt 10 ist in axialer Richtung größer als der Erstreckung der Lasche 9 in dieser Richtung entspricht. Das erste und das zweite Mantelteil 2,3 sind zusätzlich in der Zeichnung unten links mit einem Ausschnitt versehen, wobei die Ausschnitte der beiden Teile sich in der Spannlage überdecken. Diese Ausschnitte bilden einen radialen Durchlass für das Anschlussende 11 der Heizpatrone 1. Die Lasche 9 mit dem Ausschnitt 10 dient dazu, diese Ausschnitte zum Abführen des Anschlussendes 11 in Überdeckung zu halten, so dass das Austrittsende 11 nicht durch Mantelteile beim Zusammenschieben der Teile beschädigt werden kann.

Vorzugsweise bestehen beide Mantelteile 2,3 aus metallischem Werkstoff.

Die Erfindung ist nicht auf das Ausführungsbeispiel beschränkt, sondern im Rahmen der Offenbahrung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Beheizung von zylindrischen Teilen, insbesondere Düsen von Spritzgießeinrichtungen, bestehend aus einer wendelartig geformten elektrischen Heizpatrone, die auf das zu beheizende Teil aufschiebbar ist, sowie einer Spannvorrichtung, mittels derer die Heizpatrone gegen das zu beheizende Teil angedrückt ist, **dadurch gekennzeichnet, dass** die Spannvorrichtung aus einem ersten zylindrischen Mantelteil (2) besteht, in welchem die wendelartig geformte Heizpatrone (1) innenliegend und koaxial dazu ausgerichtet angeordnet ist, sowie einem zweiten zylindrischen Mantelteil (3), welches auf das erste Mantelteil (2) axial aufschiebbar ist, wobei das erste Mantelteil (2) mittels des aufgeschobenen zweiten Mantelteils (3) radial mindestens in Teilbereichen zusammengedrückt ist und die Heizpatrone (1) fest gegen das zu beheizende Teil angedrückt ist.

2. Vorrichtung nach Anspruch 1, **dadurch gekennzeichnet, dass** das erste Mantelteil (2) Schlitze (4) aufweist, die das radiale Zusammendrücken ermöglichen.

3. Vorrichtung nach Anspruch 1 oder 2, **dadurch gekennzeichnet, dass** das erste Mantelteil (2) Längsschlitze (4) aufweist, die an einem Ende offen an dem Ende des Mantelteils (2) ausmünden.

4. Vorrichtung nach einem der Ansprüche 1 bis 3, **dadurch gekennzeichnet, dass** das erste Mantelteil (2) mehrere gleichmäßig auf dem Umfang verteilte Längsschlitze (4) aufweist.

5. Vorrichtung nach einem der Ansprüche 1 bis 4, **dadurch gekennzeichnet, dass** das erste Mantelteil (2) an seinem einen Ende konisch verdickt ist.

6. Vorrichtung nach Anspruch 5, **dadurch gekennzeichnet, dass** die konische Verdickung (5) über eine Länge von ca. 10 mm verläuft.

7. Vorrichtung nach einem der Ansprüche 1 bis 6, **dadurch gekennzeichnet, dass** das zweite Mantelteil (3) an einem Ende innen liegend eine konische Verjüngung (6) aufweist.

8. Vorrichtung nach Anspruch 7, **dadurch gekennzeichnet, dass** die konische Verjüngung (6) über eine Länge von ca. 10 mm verläuft.

9. Vorrichtung nach einem der Ansprüche 1 bis 8, **dadurch gekennzeichnet, dass** das erste Mantelteil (2) am einen Ende einen nach radial innen vorragenden Kragen aufweist.

10. Vorrichtung nach einem der Ansprüche 1 bis 9, **dadurch gekennzeichnet, dass** das zweite Mantelteil (3) am einen Ende einen nach radial innen vorragenden Kragen (7) aufweist.

11. Vorrichtung nach einem der Ansprüche 1 bis 10, **dadurch gekennzeichnet, dass** das erste Mantelteil (2) eine federnde, nach radial außen vorragende Lasche (9) aufweist, das zweite Mantelteil (3) einen Ausschnitt (10) aufweist, in den die Lasche (9) in der Spannlage der beiden Mantelteile (2,3) eingreift und eine Verdrehsicherung bildet, wobei der Ausschnitt (10) in axialer Richtung größer ist als die Erstreckung der Lasche (9) in dieser Richtung.

12. Vorrichtung nach einem der Ansprüche 1 bis 11, **dadurch gekennzeichnet, dass** das erste und das zweite Mantelteil (2,3) mit jeweils einem Ausschnitt versehen sind, die sich in Spannlage mindestens teilweise überdecken und einen radialen Durchlass für das Anschlussende (11) der Heizpatrone (1) bilden.

13. Vorrichtung nach einem der Ansprüche 1 bis 12, **dadurch gekennzeichnet, dass** die Mantelteile (2,3) aus Metall bestehen.
